# EUROPÄISCHE PATENTSCHRIFT

(11) **EP 3 425 190 B1**
(45) Veröffentlichungstag und Bekanntmachung des Hinweises auf die Patenterteilung: **14.10.2020**
(21) Anmeldenummer: 17465530.8
(22) Anmeldetag: 07.07.2017
(51) Int. Cl.: F02M 26/66, F02M 26/71, F16K 11/044, F16K 1/42

(54) **VENTIL**
VALVE
SOUPAPE

(43) Veröffentlichungstag der Anmeldung: 09.01.2019
(73) Patentinhaber: Vitesco Technologies GmbH, 30165 Hannover (DE)
(72) Erfinder: Muresan, Daniel, 307220 Giroc (RO)

(56) Entgegenhaltungen:
- DE-A1-102008 005 400
- DE-B3-102004 005 315
- DE-T2- 60 125 463
- US-A- 4 793 380

## Beschreibung

### Technisches Gebiet

Die Erfindung betrifft ein Ventil zur Regulierung eines Abgasstroms, insbesondere einer Abgasrückführung, mit einem Gaseintritt, mit einem ersten Gasaustritt, mit einem zweiten Gasaustritt und mit einem Ventilkörper zur Freigabe des ersten Gasaustritts und/oder des zweiten Gasaustritts.

### Stand der Technik

Aus der US 4,793,380 ist ein Ventil mit den Merkmalen des Oberbegriffs von Patentanspruch 1 bekannt, nämlich ein Umschaltventil, um komprimierte Luft einem von zwei Trocknungstürmen eines Lufttrockners zuzuführen. Hierbei steht in einer Grundstellung ein Gaseintritt mit einem Gasaustritt in Verbindung, während die Verbindung zum anderen Gasaustritt gesperrt ist. In dieser Grundstellung steht einer von zwei Ventilsitzen mit dem Gehäuse des Ventils in Eingriff und kontaktiert der Ventilkörper ein Federelement aus Gummi, um die Verbindung vom Gaseintritt zu dem einen Gasaustritt zu schließen.

Aus der DE 10 2008 005 400 A1 ist eine wärmeübertragende Ventileinrichtung bekannt, bei der ein Ventilkörper eine translatorische Bewegung durchführt und auf diese Weise eine Verbindung von einem Gaseintritt zu einem ersten bzw. zweiten Gasaustritt öffnet oder schließt. Diese Ventilkonstruktion weist stationär angeordnete Ventilsitze auf.

Zur Optimierung des Verbrennungsprozesses in Verbrennungskraftmaschinen, und insbesondere zur Reduzierung der Emissionen, wird in einigen Anwendungsfällen Abgas aus dem Abgasstrang umgeleitet und dem in den Verbrennungsraum zuströmenden Gasgemisch beigemischt. Um den Abgasstrom zu kontrollieren werden Ventile genutzt um eine Strömungspassage vom Abgasstrang hin zur Einströmseite des Verbrennungsmotors freizugeben.

Außerdem muss die Menge des zugeleiteten Abgases genau kontrolliert werden, um möglichst genau die zugeführte Abgasmenge an den jeweiligen Lastpunkt beziehungsweise die jeweilige Betriebsart anpassen zu können. Hierzu werden Kontrolleinrichtungen genutzt, die den Gasstrom exakt regulieren können.

Darüber hinaus werden Bypassventile verwendet, um den Abgasstrom über unterschiedliche Strömungswege zur Einströmseite des Verbrennungsmotors leiten zu können. Dabei kann beispielsweise ein Abgaskühler durchströmt werden, um die Temperatur des Abgases zu reduzieren. Alternativ kann der Abgaskühler umströmt werden, um eine möglichst hohe Abgastemperatur bei der umgeleiteten Abgasmenge zu erhalten, wodurch die Aufheizung des Verbrennungsmotors und der Abgasnachbehandlungssysteme verbessert wird.

Nachteilig an den Vorrichtungen im Stand der Technik ist insbesondere, dass zwei Bauelemente genutzt werden, die einerseits die Strömungsstrecken freigeben und andererseits die strömende Abgasmenge regulieren. Außerdem weisen die im Stand der Technik bekannten Systeme oftmals einen komplexen Aufbau auf, der zu hohen Bauteilkosten führt.

### Darstellung der Erfindung, Aufgabe, Lösung, Vorteile

Daher ist es die Aufgabe der vorliegenden Erfindung ein Ventil zu schaffen, welches sowohl die jeweiligen Strömungsstrecken freigeben kann und auch die in die jeweilige Strömungsstrecke strömende Abgasmenge genau kontrollieren kann.

Diese Aufgabe wird bei einem Ventil der angegebenen Art durch die kennzeichnenden Merkmale von Patentanspruch 1 gelöst.

Die Erfindung betrifft ein Ventil zur Regulierung eines Abgasstroms, insbesondere einer Abgasrückführung, mit einem Gaseintritt, mit einem ersten Gasaustritt, mit einem zweiten Gasaustritt und mit einem Ventilkörper zur Freigabe des ersten Gasaustritts und/oder des zweiten Gasaustritts, wobei der Ventilkörper entlang einer Achse beweglich ist, wobei durch eine Bewegung des Ventilkörpers in eine erste Richtung entlang der Achse der erste Gasaustritt freigebbar ist und durch eine Bewegung des Ventilkörpers entgegen der ersten Richtung entlang der Achse der zweite Gasaustritt freigebbar ist.

Das Ventil ist erfindungsgemäß derart ausgelegt, dass wahlweise ein erster Gasaustritt freigegeben werden kann oder ein zweiter Gasaustritt. Der Ventilkörper ist dazu im Inneren des Gehäuses entlang einer Achse beweglich gelagert. Durch eine Bewegung des Ventilkörpers entlang dieser Achse wird der erste Gasaustritt oder der zweite Gasaustritt freigegeben. Durch eine einfache translatorische Bewegung des Ventilkörpers können somit zwei Gasaustritte angesteuert werden. Nicht nur kann durch den Ventilkörper ein Gasaustritt geöffnet und verschlossen werden, sondern es kann auch durch den Öffnungsgrad, also die Amplitude der Bewegung des Ventilkörpers, beeinflusst werden wie weit ein jeweiliger Gasaustritt geöffnet wird.

Der Ventilkörper ist hierbei beidseitig entlang der Achse von Federelementen gegenüber einem Gehäuse des Ventils abgestützt. Dies ist vorteilhaft, um den Ventilkörper durch die Federkräfte in einer Grundposition zu halten.

Der Ventilkörper schließt in einer Grundstellung den ersten Gasaustritt und den zweiten Gasaustritt vollständig. Damit ist sichergestellt, dass beim Ausfall der Ansteuerung des Ventils der Ventilkörper durch die Federelemente grundsätzlich in eine definierte und bekannte Stellung verschoben wird.

Ein bevorzugtes Ausführungsbeispiel ist dadurch gekennzeichnet, dass die Federelemente in der Grundstellung des Ventils entspannt sind und den Ventilkörper spielfrei in der Grundstellung halten. Die Federelemente sind soweit entspannt, dass auf den Ventilkörper nur noch eine sehr geringe vernachlässigbare Kraft wirkt. Diese Kraft dient vorzugsweise dazu den Ventilkörper spielfrei in der Grundposition zu halten und ein versehentliches Öffnen eines Gasaustritts, beispielsweise in Folge von Erschütterungen, zu vermeiden.

Auch ist es zu bevorzugen, wenn der Ventilkörper durch einen Aktuator entlang der Achse beweglich ist. Insbesondere kann der Ventilkörper über die Achse translatorisch bewegt werden. Die Verstellung mittels eines elektromagnetischen Aktuators ist dabei besonders vorteilhaft, da eine schnelle Verstellung erreicht werden kann, die zusätzlich sehr fein dosierbar ist. Alternativ können auch andersartige Aktuatoren, wie beispielsweise Elektromotoren, auf den Ventilkörper einwirken.

Ferner ist dem ersten Gasaustritt und dem zweiten Gasaustritt jeweils ein Ventilsitz zugeordnet, wobei durch das in Kontaktbringen des Ventilsitzes mit dem Ventilkörper der jeweilige Gasaustritt verschließbar ist. Der Ventilsitz dient als Gegenstück für den Ventilkörper. Liegt der Ventilkörper im jeweiligen Ventilsitz an, wird der jeweils zugehörige Gasaustritt verschlossen.

Weiterhin sind die Ventilsitze mittels der Federelemente gegenüber dem Gehäuse abgestützt. Durch das Abstützen der Ventilsitze gegenüber dem Gehäuse mittels der Federelemente wird erreicht, dass durch das Verschieben des Ventilkörpers auch die Ventilsitze relativ zum Gehäuse entlang der Achse gegen die Federelemente verschoben werden können. Die Federelemente wirken somit direkt auf die jeweiligen Ventilsitze, die somit als Übertragungsglied für die Federkraft auf den Ventilkörper dienen.

Auch sind die Ventilsitze durch eine Bewegung des Ventilkörpers entlang der Achse beweglich. Dabei sind die Ventilsitze selbst beweglich gelagert, so dass sie aufgrund der Bewegung des Ventilkörpers auch innerhalb des Gehäuses bewegt werden können.

Darüber hinaus ist es vorteilhaft, wenn die Ventilsitze durch rohrförmige Abschnitte gebildet sind, die entlang der Achse axial beweglich gelagert sind. Die Ventilsitze selbst bilden somit einen Teil der Strömungsstrecke, den das Abgas vom Gaseintritt zum jeweiligen Gasaustritt durchströmen kann. Bevorzugt strömt das Abgas vom Gaseintritt zwischen dem Spalt zwischen Ventilkörper und Ventilsitz entlang durch den rohrförmigen Ventilsitz und vorbei an dem Federelement hin zum freigegebenen Gasaustritt.

Des Weiteren ist vorgesehen, dass die die Ventilsitze bildenden Elemente jeweils einen Anschlag aufweisen, der die Bewegung des jeweiligen Ventilsitzes in Wirkrichtung der jeweiligen Federelemente entlang der Achse begrenzt. Dies ist vorteilhaft, da somit die Bewegung der Ventilsitze begrenzt werden kann. Insbesondere kann die durch die Federelemente verursachte Bewegung begrenzt werden. Dies verhindert das Herausfallen der Ventilsitze aus ihren jeweiligen Lagerungen beziehungsweise Führungen. Außerdem wird so verhindert, dass durch ein Wegbewegen des Ventilkörpers vom jeweils freizugebenden Ventilsitz der Ventilsitz dem Ventilkörper unbegrenzt folgt. Wäre dies nicht der Fall könnte der Ventilsitz aufgrund der Federkraft und/oder durch die Schwerkraft dem sich wegbewegenden Ventilkörper folgen, wodurch das Öffnen des Gasaustritts erschwert oder sogar gänzlich verhindert werden würde. Durch das Verhältnis von maximaler Bewegung des Ventilsitzes bis zum Anschlag und dem maximalen Weg, den der Ventilkörper zurücklegen kann, ergibt sich die maximale Öffnungsweite des jeweiligen Gasaustritts. Das Ventil ist derart gestaltet, dass der Ventilkörper in der Grundstellung in einer Nulllage ist und die Ventilsitze nicht im Anschlag mit dem Gehäuse stehen. Durch eine Bewegung des Ventilkörpers in eine Richtung gerät der jeweils entgegengesetzte Ventilsitz somit schnell in Anschlag mit dem Gehäuse, wodurch die Bewegung begrenzt wird. Die weitere Bewegung des Ventilkörpers führt somit unweigerlich zu einem Öffnen des jeweiligen Gasaustritts.

Wie erwähnt, sind die Ventilsitze in der Grundstellung mit ihren jeweiligen Anschlägen aufgrund der jeweils wirkenden Federkraft nicht mit dem Gehäuse in Anlage, wodurch der Ventilkörper zwischen den beiden Ventilsitzen liegt und beide Gasaustritte verschließt, wobei die Ventilsitze und der Ventilkörper durch die Federelemente gegenüber dem Gehäuse gelagert sind. Durch diesen Aufbau ist in der Grundstellung ein Ventil geschaffen, bei welchem der Ventilkörper durch die Federkräfte fest auf die Ventilsitze gepresst ist, wodurch die Gasaustritte verschlossen sind. Gleichzeitig sind die Ventilsitze und der Ventilkörper aber nicht in einer Anschlagslage mit dem Gehäuse und sind im Rahmen der wirkenden Federkräfte und der eventuell auf den Ventilkörper von außen wirkenden Verstellkräfte schwingend und beweglich im Gehäuse gelagert. Dies ist insbesondere hinsichtlich der Fehleranfälligkeit bei Störeinflüssen, wie Erschütterungen, vorteilhaft. Außerdem sind störende Geräusche aus dem Ventil aufgrund des Anschlagens am Gehäuse somit wirkungsvoll vermieden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Schnittansicht durch ein erfindungsgemäßes Ventil, wobei die Grundstellung gezeigt ist, in der beide Gasaustritte vollständig verschlossen sind,
- Fig. 2: eine Schnittansicht durch das Ventil gemäß Figur 1, wobei der Ventilkörper nach unten ausgelenkt ist und somit der obere Gasaustritt freigegeben ist, und
- Fig. 3: eine weitere Schnittansicht durch das Ventil der Figuren 1 und 2, wobei der Ventilkörper nach oben ausgelenkt ist und somit der untere Gasaustritt freigegeben ist.

### Bevorzugte Ausführung der Erfindung

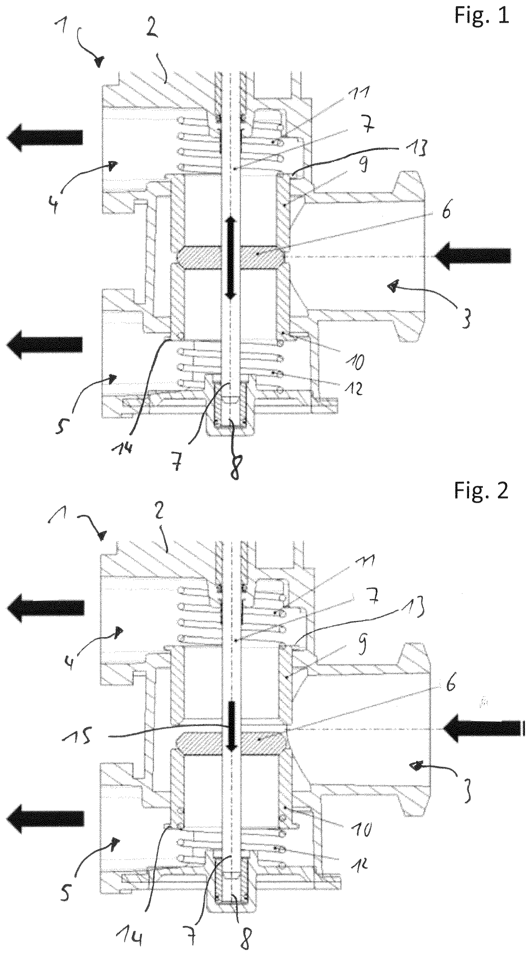

Die Figur 1 zeigt eine Schnittansicht durch ein Ventil 1 mit einem Gehäuse 2, einem Gaseintritt 3, mit einem ersten Gasaustritt 4 und mit einem zweiten Gasaustritt 5. Das Ventil 1 kann entlang des Gaseintritts 3 hin zum Gasaustritt 4 oder zum Gasaustritt 5 durchströmt werden.

Das Ventil 1 weist in seinem Inneren einen Ventilkörper 6 auf, der auf einer Führungsstange 7 angeordnet ist und translatorisch entlang der Achse 8 im Gehäuse 2 bewegt werden kann. Die Führungsstange 7 ist beidseitig im Gehäuse 2 gelagert und kann durch einen nicht gezeigten Aktuator bewegt werden.

Jedem der Gasaustritte 4, 5 ist ein als rohrförmige Hülse ausgebildeter Ventilsitz 9, 10 zugeordnet, die ihrerseits durch die Federelemente 11, 12 gegenüber dem Gehäuse 2 abgestützt sind. Die Ventilsitze 9, 10 weisen jeweils einen Anschlag 13, 14 auf, der ihre Bewegung entlang der Achse 8 in Wirkrichtung der Federelemente 11, 12 begrenzt.

Die Ventilsitze 9, 10 werden durch die jeweiligen Federelemente 11, 12 hin zum Zentrum des Ventils 1 mit einer Federkraft beaufschlagt, wodurch die Ventilsitze mit ihren jeweiligen Anschlägen 13, 14 fast am Gehäuse 2 in Anlage kommen können.

Die Figur 1 zeigt die Grundstellung des Ventils 1, in welcher beide Gasaustritte 4, 5 vollständig durch den Ventilkörper 6 verschlossen sind. Die beiden Ventilsitze 9, 10 liegen am Ventilkörper 6 derart an, dass diese vollständig verschlossen sind. Es kann somit kein Gas von Eintritt 3 zu den Austritten 4, 5 überströmen. Die Ventilsitze 9, 10 bilden mit dem Ventilkörper 6 ein System, das beweglich über die Federelemente 11, 12 gegenüber dem Gehäuse 2 abgestützt ist. Die Federelemente 11, 12 tragen in der gezeigten Grundstellung dazu bei, dass die jeweiligen Ventilsitze 9, 10 vollständig am Ventilkörper 6 anliegen und auch durch Störeinflüsse, beispielsweise Erschütterungen, nicht vom Ventilkörper 6 abgehoben werden.

Die Ventilsitze 9, 10 liegen jedoch in der Grundstellung nicht mit ihren Anschlägen 13, 14 am Gehäuse 2 an. Dadurch wird erreicht, dass die Ventilsitze 9, 10 mit dem Ventilkörper 6 gegenüber dem Gehäuse 2 zumindest in engen Grenzen weiterhin beweglich sind. Auch wird dadurch sichergestellt, dass die Ventilsitze 9, 10 in jedem Fall fest genug an den Ventilkörper 6 gepresst werden, um die Gasaustritte 4, 5 sicher zu verschließen.

Die Figur 2 zeigt das Ventil 1 der Figur 1, wobei abweichend nun eine Stellung gezeigt ist, in der der obere Gasaustritt 4 freigegeben ist. Der Ventilkörper 6 ist entlang der Achse 8 nach unten bewegt, dadurch löst sich der Ventilkörper 6 von dem oberen Ventilsitze 9. Der Ventilsitz 9 wird durch das Federelement 11 nach unten bewegt, bis der Anschlag 13 am Gehäuse 2 zu liegen kommt. Dadurch wird die Bewegung des Ventilsitzes 9 wirksam begrenzt.

Der Ventilkörper 6 wird weiter nach unten bewegt und befindet sich in Anlage mit dem unteren Ventilsitz 10 und drückt diesen entgegen der Federkraft des Federelementes 12 nach unten. Dadurch wird der untere Ventilsitz 10 vollständig verschlossen, während der obere Ventilsitz 9 durch das Abheben des Ventilkörpers 6 freigegeben wird. Der obere Gasaustritt 4 ist somit freigegeben.

Die Bewegung des Ventilkörpers 6 ist mit dem Pfeil 15 dargestellt.

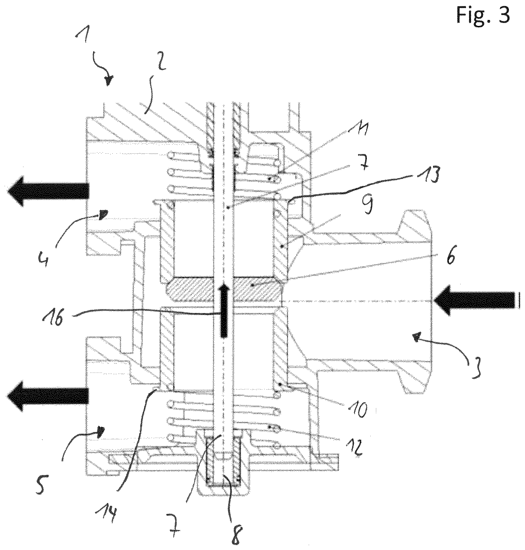

Die Figur 3 zeigt die entgegengesetzte Bewegung des Ventilkörpers 6 zu Figur 2 entlang der Achse 8. Die Bewegung ist mit dem Pfeil 16 verdeutlicht. Hier wird der untere Ventilsitz 10 durch das Federelement 12 nach oben bewegt, bis es mit dem Anschlag 14 am Gehäuse 2 zu liegen kommt. Durch die weitere Bewegung des Ventilkörpers 6 nach oben wird der obere Ventilsitz 9 aus seiner Anschlagslage nach oben entgegen der Federkraft des Federelementes 11 bewegt, wodurch dieser an den Ventilkörper 6 gepresst wird und somit der Gasaustritt 4 verschlossen wird, während er untere Gasaustritt 5 freigegeben wird.

Die Ausführungsbeispiele der Figuren 1 bis 3 beziehen sich auf eine vorteilhafte Ausgestaltung. Insbesondere hinsichtlich der Dimensionierung, der Materialwahl oder der geometrischen Gestaltung der einzelnen Elemente weisen die Figuren keinen beschränkenden Charakter auf. Sie dienen der Verdeutlichung des Funktionsprinzips des erfindungsgemäßen Ventils.

## Patentansprüche

1. Ventil (1) zur Regulierung eines Abgasstroms, insbesondere einer Abgasrückführung, mit einem Gaseintritt (3), mit einem ersten Gasaustritt (4, 5), mit einem zweiten Gasaustritt (4, 5) und mit einem Ventilkörper (6) zur Freigabe des ersten Gasaustritts (4, 5) und/oder des zweiten Gasaustritts (4, 5), wobei
der Ventilkörper (6) entlang einer Achse (8) beweglich ist und durch eine Bewegung des Ventilkörpers (6) in eine erste Richtung (15, 16) entlang der Achse (8) der erste Gasaustritt (4, 5) freigebbar ist und durch eine Bewegung des Ventilkörpers (6) entgegen der ersten Richtung (15, 16) entlang der Achse (8) der zweite Gasaustritt (4, 5) freigebbar ist,
der Ventilkörper (6) beidseitig entlang der Achse (8) von Federelementen (11, 12) gegenüber einem Gehäuse (2) des Ventils (1) abgestützt ist,
dem ersten Gasaustritt (4, 5) und dem zweiten Gasaustritt (4, 5) jeweils ein Ventilsitz (9, 10) zugeordnet ist, wobei durch das in Kontaktbringen des Ventilsitzes (9, 10) mit dem Ventilkörper (6) der jeweilige Gasaustritt (4, 5) verschließbar ist,
die die Ventilsitze (9, 10) bildenden Elemente jeweils einen Anschlag (13, 14) aufweisen, der die Bewegung des jeweiligen Ventilsitzes (9, 10) in Wirkrichtung der jeweiligen Federelemente (11, 12) entlang der Achse (8) begrenzt, und die Ventilsitze (9, 10) durch die Federelemente (11, 12) gegenüber dem Gehäuse (2) gelagert sind,
**dadurch gekennzeichnet, dass** die Ventilsitze (9, 10) in der Grundstellung mit ihren jeweiligen Anschlägen (13, 14) aufgrund der jeweils wirkenden Federkraft nicht mit dem Gehäuse (2) in Anlage sind, wodurch der Ventilkörper (6) zwischen den beiden Ventilsitzen (9, 10) liegt und beide Gasaustritte (4, 5) verschließt.

2. Ventil (1) nach Anspruch 1, **dadurch gekennzeichnet, dass** die Federelemente (11, 12) in der Grundstellung des Ventils (1) entspannt sind und den Ventilkörper (6) spielfrei in der Grundstellung halten.

3. Ventil (1) nach Anspruch 1 oder 2, **dadurch gekennzeichnet, dass** der Ventilkörper (6) durch einen Aktuator entlang der Achse (8) beweglich ist.

4. Ventil (1) nach einem der vorhergehenden Ansprüche, **dadurch gekennzeichnet, dass** die Ventilsitze (9, 10) durch eine Bewegung des Ventilkörpers (6) entlang der Achse (8) beweglich sind.

5. Ventil (1) nach einem der vorhergehenden Ansprüche, **dadurch gekennzeichnet, dass** die Ventilsitze (9, 10) durch rohrförmige Abschnitte gebildet sind, die entlang der Achse (8) axial beweglich gelagert sind.

## Claims

1. Valve (1) for regulating an exhaust-gas flow, in particular an exhaust-gas recirculation, having a gas inlet (3), having a first gas outlet (4, 5), having a second gas outlet (4, 5) and having a valve body (6) for opening up the first gas outlet (4, 5) and/or the second gas outlet (4, 5), wherein
the valve body (6) is movable along an axis (8) and the first gas outlet (4, 5) can be opened up by means of a movement of the valve body (6) in a first direction (15, 16) along the axis (8) and the second gas outlet (4, 5) can be opened up by means of a movement of the valve body (6) counter to the first direction (15, 16) along the axis (8),
the valve body (6) is, at both sides along the axis (8), supported relative to a housing (2) of the valve (1) by spring elements (11, 12),
the first gas outlet (4, 5) and the second gas outlet (4, 5) are each assigned a valve seat (9, 10), wherein the respective gas outlet (4, 5) can be closed as a result of the valve seat (9, 10) being brought into contact with the valve body (6),
the elements that form the valve seats (9, 10) each have a stop (13, 14) which limits the movement of the respective valve seat (9, 10) in the direction of action of the respective spring elements (11, 12) along the axis (8), and the valve seats (9, 10) are mounted relative to the housing (2) by means of the spring elements (11, 12),
**characterized in that**,
in the basic position, the valve seats (9, 10) are not in contact, by way of their respective stops (13, 14), with the housing (2) owing to the respectively acting spring force, whereby the valve body (6) is situated between the two valve seats (9, 10) and closes both gas outlets (4, 5) .

2. Valve (1) according to Claim 1, **characterized in that**, in the basic position of the valve (1), the spring elements (11, 12) are relaxed and hold the valve body (6) in the basic position without play.

3. Valve (1) according to Claim 1 or 2, **characterized in that** the valve body (6) is movable along the axis (8) by means of an actuator.

4. Valve (1) according to any of the preceding claims, **characterized in that** the valve seats (9, 10) are movable along the axis (8) by means of a movement of the valve body (6).

5. Valve (1) according to any of the preceding claims, **characterized in that** the valve seats (9, 10) are formed by tubular portions which are mounted so as to be axially movable along the axis (8).

## Revendications

1. Soupape (1) pour la régulation d'un courant de gaz d'échappement, notamment d'un recyclage de gaz d'échappement, munie d'une entrée de gaz (3), munie d'une première sortie de gaz (4, 5), munie d'une deuxième sortie de gaz (4, 5) et munie d'un corps de soupape (6) pour le dégagement de la première sortie de gaz (4, 5) et/ou de la deuxième sortie de gaz (4, 5), le corps de soupape (6) étant mobile le long d'un axe (8) et la première sortie de gaz (4, 5) pouvant être dégagée par un mouvement du corps de soupape (6) dans une première direction (15, 16) le long de l'axe (8) et la deuxième sortie de gaz (4, 5) pouvant être dégagée par un mouvement du corps de soupape (6) dans une direction opposée à la première direction (15, 16) le long de l'axe (8),
le corps de soupape (6) étant supporté des deux côtés le long de l'axe (8) par des éléments ressorts (11, 12) par rapport à un boîtier (2) de la soupape (1),
un siège de soupape (9, 10) étant respectivement associé à la première sortie de gaz (4, 5) et à la deuxième sortie de gaz (4, 5), la sortie de gaz respective (4, 5) pouvant être fermée par la mise en contact du siège de soupape (9, 10) avec le corps de soupape (6),
les éléments formant les sièges de soupape (9, 10) comprenant respectivement une butée (13, 14), qui limite le mouvement du siège de soupape respectif (9, 10) dans la direction d'action des éléments ressorts respectifs (11, 12) le long de l'axe (8), et les sièges de soupape (9, 10) étant montés au travers des éléments ressorts (11, 12) par rapport au boîtier (2), **caractérisée en ce que**
dans la position de base, les sièges de soupape (9, 10) ne sont pas en appui avec le boîtier (2) avec leurs butées respectives (13, 14) en raison de la force de ressort agissant respectivement, le corps de soupape (6) étant ainsi situé entre les deux sièges de soupape (9, 10) et fermant les deux sorties de gaz (4, 5).

2. Soupape (1) selon la revendication 1, **caractérisée en ce que** les éléments ressorts (11, 12) sont détendus dans la position de base de la soupape (1) et maintiennent le corps de soupape (6) dans la position de base sans jeu.

3. Soupape (1) selon la revendication 1 ou 2, **caractérisée en ce que** le corps de soupape (6) est mobile le long de l'axe (8) par un actionneur.

4. Soupape (1) selon l'une quelconque des revendications précédentes, **caractérisée en ce que** les sièges de soupape (9, 10) sont mobiles le long de l'axe (8) par un mouvement du corps de soupape (6).

5. Soupape (1) selon l'une quelconque des revendications précédentes, **caractérisée en ce que** les sièges de soupape (9, 10) sont formés par des sections tubulaires, qui sont montées sous forme mobile axialement le long de l'axe (8).
